# EUROPÄISCHE PATENTSCHRIFT

(11) **EP 0 993 569 B1**
(45) Veröffentlichungstag und Bekanntmachung des Hinweises auf die Patenterteilung: **13.02.2002**
(21) Anmeldenummer: 98940211.0
(22) Anmeldetag: 11.07.1998
(51) Int. Cl.: F16H 59/10, B60K 20/02

(54) **WÄHLHEBEL FÜR AUTOMATIKGETRIEBE**
SELECTOR LEVER FOR AN AUTOMATIC GEARBOX
LEVIER SELECTEUR POUR BOITE AUTOMATIQUE

(30) Priorität: 11.07.1997 DE 19729678
(43) Veröffentlichungstag der Anmeldung: 19.04.2000
(73) Patentinhaber: HKR HAAS GMBH & CO. KUNSTSTOFF KG., D-91244 Reichenschwand (DE)
(72) Erfinder: HORN, Heinz, D-91244 Reichenschwand (DE); HESE, Wolfgang, D-91207 Lauf (DE)
(74) Vertreter: Mörtel & Höfner
(86) Internationale Anmeldenummer: EP9804320
(87) Internationale Veröffentlichungsnummer: WO9902895

(56) Entgegenhaltungen:
- EP-A1- 0 300 268
- DE-C1- 19 506 766
- DE-C1- 19 513 809
- US-A- 5 181 592

## Beschreibung

Die Erfindung betrifft einen Wählhebel für Automatikgetriebe, mit dem das Schaltgetriebe eines Kraftfahrzeuges steuerbar ist bzw. verschiedene Schaltstellungen wählbar sind . Es weist einen Handgriff mit einem daran angesetzten Hohischaft auf, in dem eine Arretierstange in Axialrichtung zwischen einer Freigabestellung und einer Arretierstellung bewegbar ist. In der Arretierstellung ist der Hebel in der jeweiligen Schaltstellung fixiert. In der Freigabestellung kann der Wählhebel in eine andere Schaltstellung geschwenkt werden. Mit Hilfe der Arretierstange ist die Arretierung lösbar. Die Arretierstange wird bei einem aus DE 195 06 766 C1 bekannten Wählhebel, lt. Überbegriff des Anspruchs 1 mit einem als Drucktaste ausgebildeten Betätigungsteil betätigt. Das Betätigungsteil ist in einem Führungskanal des Handgriffes quer zur Axialrichtung bzw. zur Bewegungsrichtung der Arretierstange bewegbar. Am Betätigungsteil ist ein Schwenkhebel befestigt, der in einer von der Axialrichtung und der Betätigungsrichtung aufgespannten Ebene schwenkbar ist. Bei einer Ausführungsform des bekannten Wählhebels ist der Schwenkhebel einarmig ausgebildet und fährt bei Betätigung der Drucktaste mit seinem Freiende auf eine im Handgriff angeordnete Schrägfläche auf. Der Schwenkhebel durchgreift das in den Führungskanal des Handgriffs hineinragende Ende der Arretierstange und hebt die Arretierstange mit einem schräg verlaufenden Hebelarmbereich an, wodurch die Arretierung des Wählhebels gelöst wird.

Nachteilig bei dem bekannten Wählhebel ist neben seiner aufwendigen Montage insbesondere die Tatsache, daß die Arretierstange mit einer quer zu ihrer Längsachse bzw. quer zur Axialrichtung wirkenden Kraftkomponente beaufschlagt wird. Durch diese Querbelastung ist die Kraft zum Anheben der Arretierstange erhöht. Außerdem unterliegt die Führung der Arretierstange im Hohischaft einem erhöhten Verschleiß.

Davon ausgehend ist es die Aufgabe der Erfindung, einen Wählhebel vorzuschlagen, der diese Nachteile nicht aufweist.

Die Lösung besteht in einem Wählhebel mit den kennzeichen des Anspruches 1. Danach ist wenigstens eine Schrägfläche am Betätigungsteil und wenigstens eine mit ihr nach Art eines Keilschubgetriebes zusammenwirkende Gegenfläche an einem im Handgriff in Bewegungsrichtung der Arretierstange bzw. in Axialrichtung zwangsgeführten Schubteil vorhanden, wobei dieses mit dem den Handgriff zugewandten Betätigungsende der Arretierstange über eine in der Betätigungsrichtung nicht spielfreie bzw. bewegliche Verbindung bewegungsgekoppelt ist. Keilschubgetriebe der in Rede stehenden Art sind beispielsweise in "Konstruktionselemente der Feinmechanik", Carl Hauser Verlag, 1993, S. 105,537 beschrieben. Sie weisen ein Antriebsteil mit einer Keilfläche und ein Abtriebsteil mit einer mit der Keilfläche zusammenwirkenden Gegenfläche auf. Das Abtriebs- oder Schubteil eines solchen Keilschubgetriebes ist in einer quer zur Bewegungsrichtung des Antriebs- bzw. Betätigungsteiles zwangsgeführt. Das Schubteil wird bei seinem Zusammenwirken mit der Schrägfläche des Betätigungsteiles mit einer in Betätigungsrichtung wirkenden Kraftkomponente beaufschlagt. Um eine solche Querbelastung der Arretierstange zu vermeiden, wird erfindungsgemäß vorgeschlagen, daß nicht die Arretierstange selbst das Schubteil bildet, sondern daß ein separates Schubteil vorhanden ist, welches mit dem dem Handgriff zugewandten Betätigungsende der Arretierstange über eine in der Betätigungsrichtung nicht spielfreie bzw. bewegliche Verbindung bewegungsgekoppelt ist. Die in Betätigungsrichtung wirkende Kraftkomponente wird somit vom Schubteil bzw. einer mit ihm im Sinne einer Zwangsführung zusammenwirkenden Führungsfläche des Handgriffes aufgenommen. Dadurch, daß die Bewegungskoppelung zwischen dem Schubteil und dem Betätigungsende der Arretierstange in der Betätigungsrichtung nicht spielfrei, mit andren Worten also beweglich ist, ist eine Übertragung dieser Kraftkomponente auf die Arretierstange wirkungsvoll ausgeschlossen.

In den Unteransprüchen sind vorteilhafte Ausgestaltungen der Erfindung angegeben.

Die Erfindung wird anhand eines in den beigefügten Zeichnungen dargestellten Ausführungsbeispiels näher erläutert. Es zeigen:
- Fig. 1: einen erfindungsgemäßen Wählhebel in zum Teil geschnittener perspektivischer Ansicht,
- Fig. 2: eine perspektivische Ansicht eines Betätigungsteils, eines Kupplungsteils, des Betätigungsendes einer Arretierstange in wirkungsgemäßer Zusammenstellung,

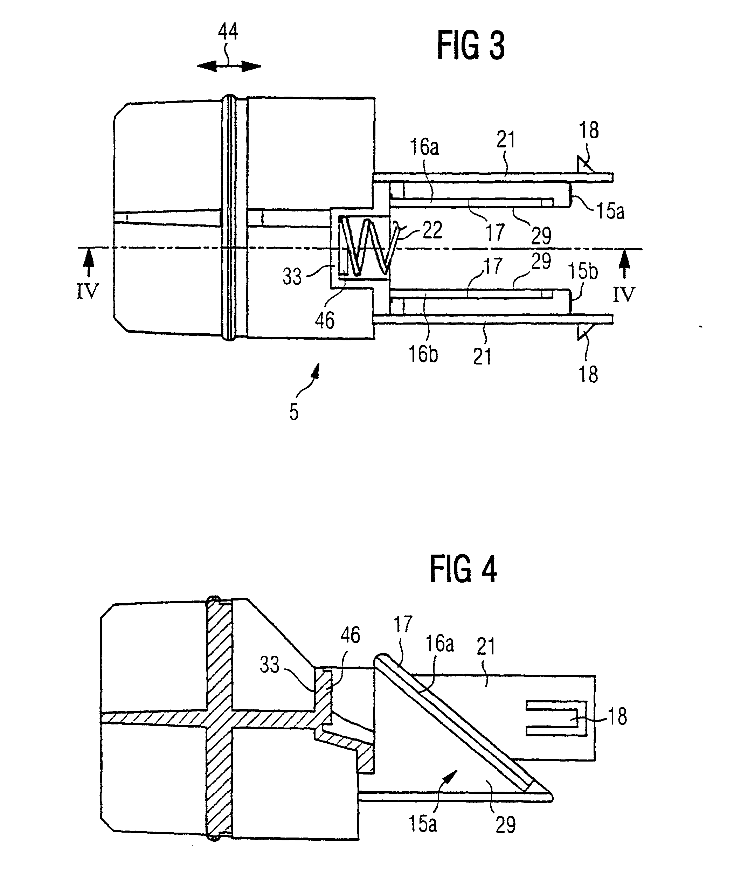

- Fig. 3: eine Draufsicht auf das Betätigungsteil nach Fig. 2 in Richtung des Pfeiles III in Fig. 2,
- Fig. 4: einen Querschnitt längs der Linie IV-IV in Fig. 3,

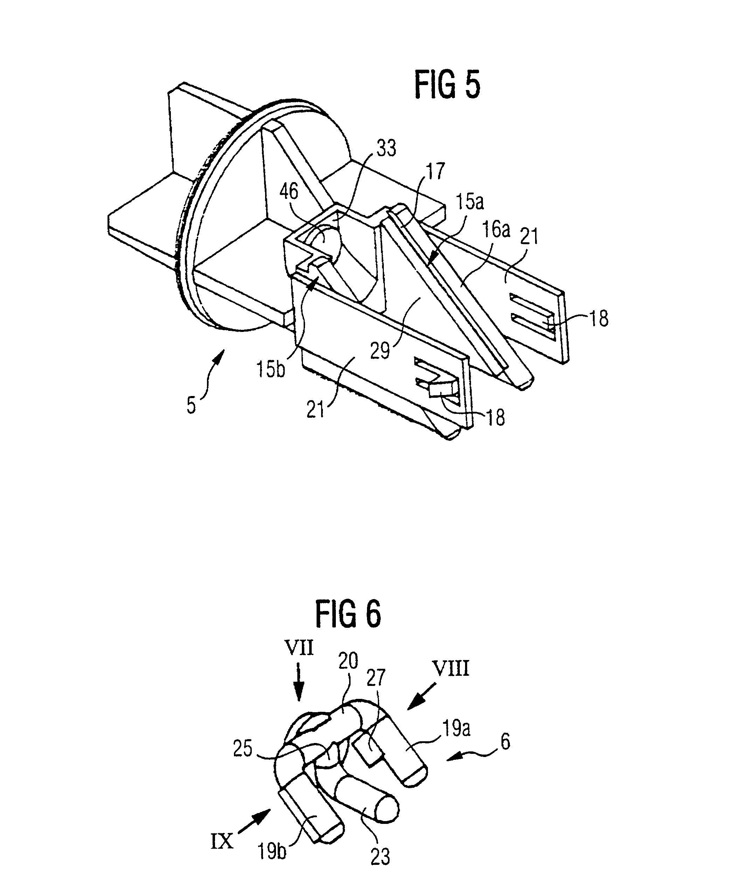

- Fig. 5: ein Betätigungsteil ohne Drucktaste in perspektivischer Darstellung,
- Fig. 6: ein Schubteil in perspektivischer Darstellung,

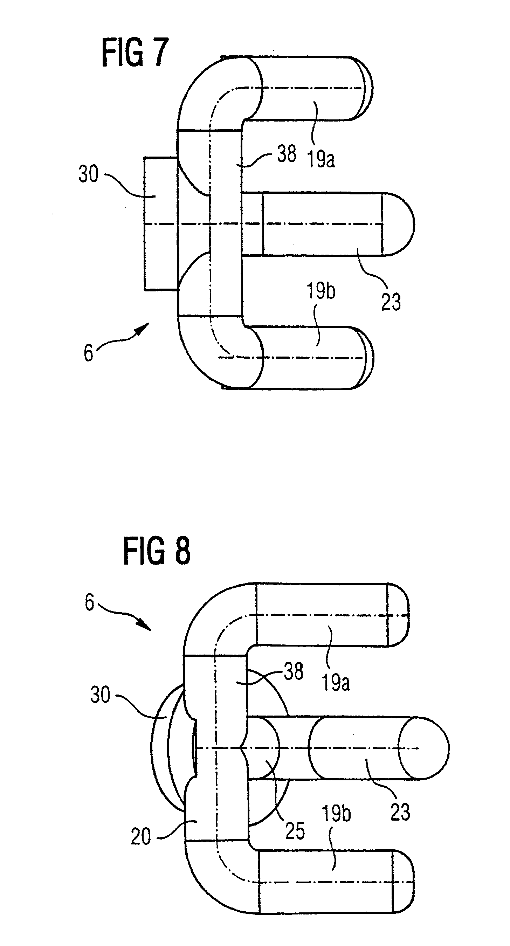

- Fig. 7: eine Draufsicht in Richtung des Pfeiles VII in Fig. 6,
- Fig. 8: eine Draufsicht in Richtung des Pfeiles VIII in Fig. 6,

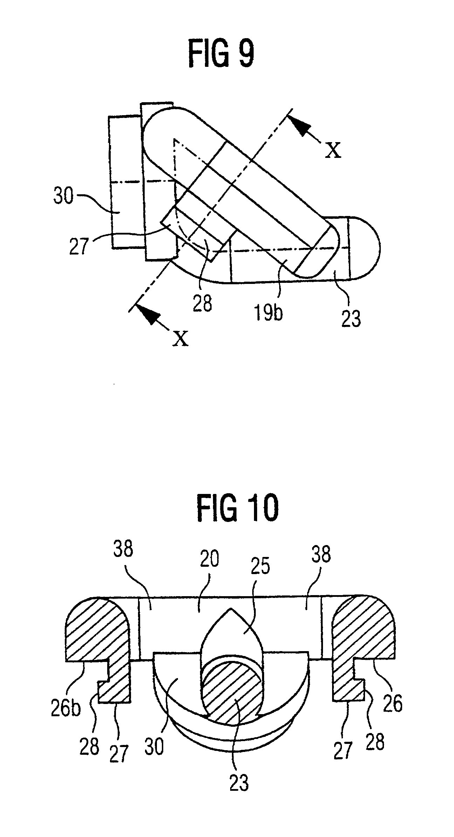

- Fig. 9: eine Seitenansicht in Richtung des Pfeiles IX in Fig. 6,
- Fig. 10: einen Schnitt längs der Linie X-X in Fig. 9,
- Fig. 11: das Grundgehäuse eines Wählhebel-Handgriffes,
- Fig. 12: eine Schnittdarstellung entsprechend der Linie XII- XII in Fig. 11, und

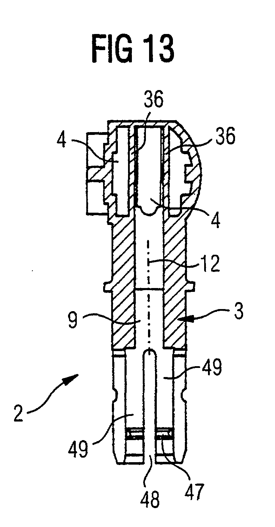

- Fig. 13: eine Schnittdarstellung entsprechend der Linie XIII-XIII in Fig. 11.

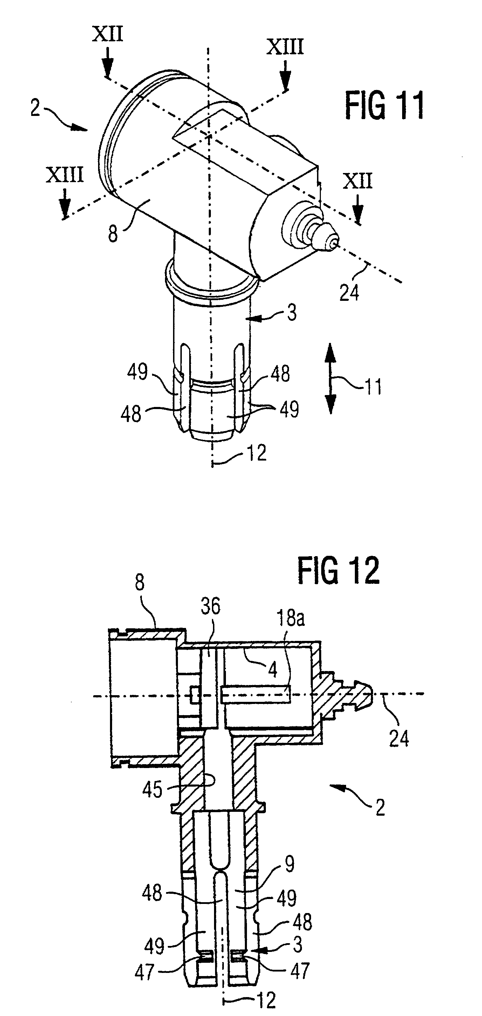

Ein erfindungsgemäßer Wählhebel 1 setzt sich im wesentlichen aus einem Grundgehäuse 2, einem daran angeformten Hohlschaft 3, einem in einem Führungskanal 4 (Fig. 12) des Grundgehäuses verschieblich geführten Betätigungsteil 5, einem Schubteil 6 und einer Arretierstange zusammen, deren in den Führungskanal 4 hineinreichendes bzw. ihm zugewandtes Betätigungsende 7 stellvertretend für die gesamte Arretierstange in den entsprechenden Abbildungen dargestellt ist.

Das Grundgehäuse wird im wesentlichen von einem einseitig geschlossenen Rohr 8 gebildet, dessen Innenraum den Führungskanal 4 bildet. Am Rohr ist der Hohischaft 3 angeformt, wobei dessen in den Führungskanal 4 mündender Innenraum die Arretierstange (nicht dargestellt) aufnimmt. Das Rohr 8 des Grundgehäuses 2 und der sich an das Rohr anschließende Bereich des Hohlschaftes sind von einem Mantel 10 umgeben, wobei das Rohr zusammen mit dem entsprechenden Teil des Mantels 10 einen Handgriff 13 bildet. Die Mittellängsachse 12 des Innenraums 9 bzw. des Hohlschaftes 3 verläuft im wesentlichen rechtwinklig zur Mittellängsachse 24 des Führungskanales bzw. des Handgriffes.

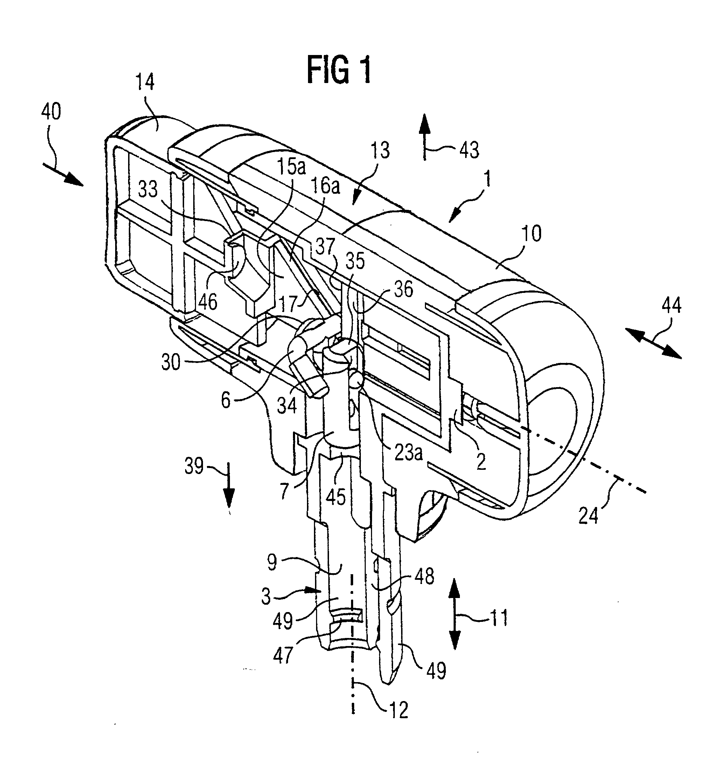

Das Betätigungsteil 5 weist an seinem einen Ende einen Druckknopf 14 auf, während das andere Ende in Form von zwei parallelen und mit Abstand zueinander angeordneten Armen 15a,15b ausgebildet ist. Die beiden Arme 15a,15b sind im wesentlichen plattenförmige Gebilde mit der Umrißform eines rechtwinkligen Dreiecks, wobei ihre im Montagezustand vom Hohlschaft 3 wegweisenden die Hypotenuse des Dreiecks bildende Kante bzw. Schmalseite eine Keilfläche 16a,16b bildet. Die Keilflächen weisen vom Hohlschaft 3 weg und sind nach außen durch eine rechtwinklig aus ihrer Planebene vorstehende Anschlagschulter 17 begrenzt. An die Außenflächen der Arme 15a,15b sind etwa rechteckförmige Seitenlaschen 21 angeformt. Nahe deren Freienden stehen aus ihren Außenseiten Fixiernasen 18 hervor, die in entsprechende Ausnehmungen 18a des Grundgehäuses 2 eingreifen und das Betätigungsteil in einer ausgefahrenen Vormontagestellung, in der der Druckknopf 14 aus dem Handgriff 13, etwa gem. Fig. 1, herausschaut, fixieren.

Das Schubteil 6 ist im wesentlichen von einem C-förmigen Bügel gebildet, an dessen seine beiden Seitenschenkel 19a,19b verbindenden Mittelschenkel 20 ein Kupplungszapfen 23 angeformt ist. Der Kupplungszapfen erstreckt sich im Montagezustand in Richtung der Mittellängsachse 24 des Handgriffes 13 bzw. in Betätigungsrichtung 25 vom Betätigungsteil 5 weg. Der Betätigungszapfen ist im wesentlichen zylinderförmig und geht an dem seinem Freiende abgewandten Ende in einen etwa rechtwinklig abgewinkelten Abschnitt 25 über, der am Mittelschenkel 20 angeformt ist. Die Seitenschenkel 19a,19b weisen an ihrer im Montagezustand dem Hohischaft 3 zugewandten Unterseite eine Gegenfläche 26a bzw. 26b auf, die mit der entsprechenden Keilfläche 16a bzw. 16b des Betätigungsteils 5 im Sinne einer Gleitpaarung bzw. eines Keilschubgetriebes zusammenwirkt. Aus dem dem Kupplungszapfen 23 zugewandten Randbereich der Gegenflächen 26a,26b steht ein Anschlag 27 hervor, der mit einer Anschlagfläche 28 mit den Innenseiten 29 der Arme 15a,15b des Betätigungsteils 5 zusammenwirkt. Am Mittelschenkel 20 ist neben dem Kupplungszapfen 23 ein etwa kreisscheibenförmiger Fixierteller 30 als Gegenlager und Halteteil für eine Druckfeder 22 angeformt. Die Druckfeder 22 stützt sich andererseits an einer die beiden Arme 15a,15b an ihrem dem Druckknopf 14 zugewandten Ende miteinander verbindenden Stützwand 33 ab.

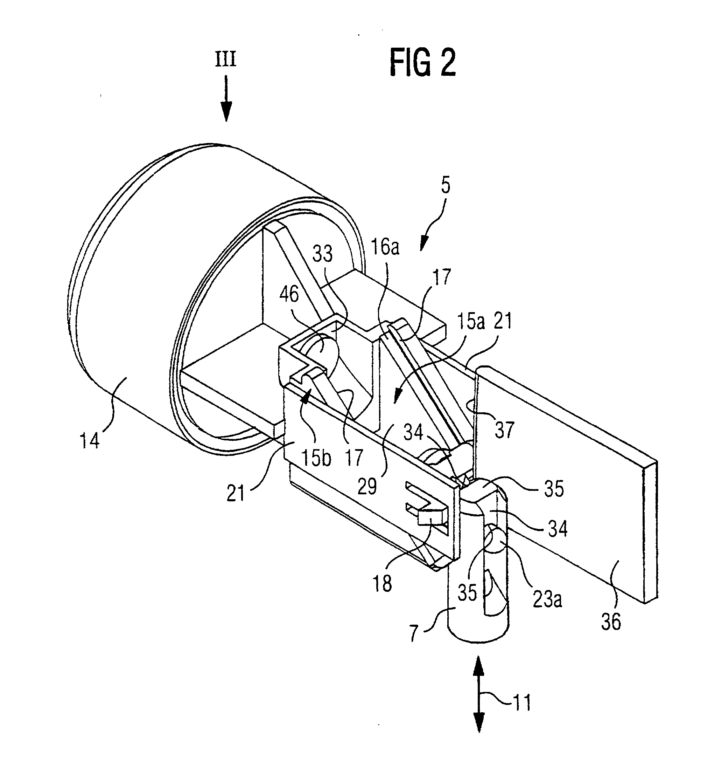

Das Betätigungsende 7 der Arretierstange ist im wesentlichen zylinderförmig ausgebildet. Es weist zwei diametral gegenüberliegende Nuten 34 auf, die bis in seine Stirnseite 35 hineinreichen. Ferner ist das Betätigungsende 7 von einer vorzugsweise als Langloch ausgebildeten Durchgangsöffnung 31 durchsetzt, die sich in Betätigungsrichtung 25 erstreckt und die vom Kupplungszapfen 23 durchgriffen ist. Die Seitenschenkel 19a,19b flankieren das Betätigungsende 7 mit Radialabstand. Zwischen einem Seitenschenkel 19a,19b und dem Betätigungsende ist jeweils eine Gehäusewand 36 angeordnet, die sich mit ihrer Planebene in einer Ebene erstreckt, die zu der von der Mittellängsachse 12 und der Mittellängsachse 24 aufgespannten Ebene parallel verläuft (vgl. insbesondere Fig. 1 und 2). Die dem Mittelschenkel 20 zugewandte Schmalseite dieser Wand ist abgerundet und wirkt als Führungsfläche 37 mit dem ihr zugewandten Umfangsflächenbereich 38 des Mittelschenkels 20 des Schubteils 6 nach Art einer in Richtung der Mittellängsachse 12 wirksamen Gleitführung zusammen.

Ein erfindungsgemäßer Wählhebel 1 arbeitet wie folgt: Bei der oben beschriebenen Ausführungsform ist die Arretierstange in Arretierrichtung 39 (Fig. 1) federbelastet, die Keilflächen 16a,16b weisen in die entgegengesetzte Richtung, nämlich in die Freigaberichtung 43. In dem in Fig. 1 dargestellten Zustand ist der Wählhebel arretiert. Wenn die Drucktaste 14 in Richtung des Pfeiles 40 in das Grundgehäuse 2 hineingedrückt wird, bewegen sich die Arme 15a,15b in derselben Richtung, wodurch das Schubteil 6, indem seine Gegenflächen 26a,26b mit den Schrägflächen 16a,16b der Arme 15a, 15b nach Art eines Keilschubgetriebes zusammenwirken, in Freigaberichtung 43 bewegt wird. Dementsprechend wird das Betätigungsende 7 bzw. die Arretierstange in derselben Richtung von dem Kupplungszapfen 23 mitgenommen. Bei vollständig nach innen gedrückten Druckknopf 14 befindet sich die Arretierstange in ihrer Freigabestellung, in der die Arretierung des Wählhebels in einer (nicht dargestellten) Schaltungsbaugruppe frei schwenkbar ist. Wie bei Keilschubgetrieben der in Rede stehenden Art üblich, wird bei Betätigung des Druckknopfes 14 die in Pfeilrichtung 40 wirkende Druckkraft in eine in Pfeilrichtung 40 und eine in Freigaberichtung 43 wirkende Kraftkomponente zerlegt. Die in Pfeilrichtung 40 wirkende Kraftkomponente wird durch die Führungsfläche 37 der Gehäusewand 36 abgefangen. Eine Einwirkung dieser Kraftkomponente auf das Betätigungsende 7 bzw. auf die Arretierstange ist dadurch ausgeschlossen, daß die Verbindung zwischen dem Betätigungsende 7 und dem Kupplungszapfen 23 in der Betätigungsrichtung 44 nicht spielfrei ist. Der Kupplungszapfen 23 ist also am Betätigungsende 7 der Arretierstange in Betätigungsrichtung beweglich geführt; das vom Kupplungszapfen 23 durchgriffene Betätigungsende 7 kann daher in Betätigungsrichtung 44 gewissermaßen hin- und herwandem. Die Führung 45 der Arretierstange bzw. des Betätigungsendes 7 im Hohlschaft 3 ist dadurch praktisch frei von jeglichen Querbelastungen, was einerseits die Druckknopfbetätigungskräfte und andererseits den Verschleiß der Führung 45 verringert.

Zur Montage eines erfindungsgemäßen Wählhebels wird folgendermaßen vorgegangen: Das mit einem Kupplungsteil 6 bestückte Betätigungsteil 5 wird in den Führungskanal 4 eingeschoben und dort mittels einer (nicht dargestellten) Montageschablone in einer Vormontagestellung gehalten. In dieser Vormontagestellung ragt der Kupplungszapfen 23 noch nicht in die Bewegungsbahn des Betätigungsendes 7 der Arretierstange. Die Fixierung des Kupplungsteiles 6 am Betätigungsteil 5 wird über die bereits oben erwähnte Druckfeder 22 gewährleistet, die mit ihrem einen Windungsende den Fixierteller 30 am Kupplungsteil 6 und mit ihrem anderen Windungsende einen Fixierteller 46 an der Stützwand 33 klemmend umfaßt. Die Arretierstange ist an der ebenfalls bereits oben erwähnten, nicht dargestellten und neben dem Fahrersitz eines Fahrzeugs angeordneten Schaltungsbaugruppe fixiert. Zur Montage wird der auf die genannte Art und Weise vorkonfektionierte Handgriff mit seinem Hohlschaft 3 auf die Arretierstange aufgesetzt. Diese Aufsetzbewegung wird durch einen von der Innenseite des Hohlschaftes radial nach innen vorspringenden und in eine entsprechende Ausnehmung an der Arretierstange (nicht dargestellt) eingreifenden Ringvorsprung 47 begrenzt. Um das Aufschieben des Hohlschaftes 3 auf die Arretierstange zu erleichtern, ist dessen unteres Ende durch Axialschlitze 48 in Form von Federzungen 49 ausgebildet. Bei Erreichen der genannten Arretierposition, wenn also der Ringvorsprung 47 einrastet, befindet sich das Betätigungsende 7 in einer Axiallage, in der seine Durchgangsöffnung 35 mit dem Kupplungszapfen 23 fluchtet. Die (nicht dargestellte) Montageschablone wird entfernt, wodurch sich das Betätigungsteil 5 in Pfeilrichtung 40 weiter in den Führungskanal hineinschieben läßt. Am Ende dieser Einschubbewegung durchgreift der Kupplungszapfen 23 die Durchgangsöffnung 35. Die Fixiemasen 28 des Betätigungsteiles 5 rasten in die Ausnehmungen 18a des Grundgehäuses 2 ein (nicht dargestellt). Das Betätigungsteil 5 ist dadurch unverlierbar im Grundgehäuse 2 fixiert, ist aber um eine der Länge der Ausnehmungen 18a entsprechende Strecke verschiebbar. Die Seitenlaschen 21 dienen dabei der Führung des Betätigungsteils 5. Die sich an der Stützwand 33 und am Schubteil 6 abstützende Feder gewährleistet, daß das Schubteil 6 stets mit seinem Mittelschenkel 20 an der Führungsfläche 37 der Gehäusewände 36 anliegt. Auf diese Weise wird gewährleistet, daß der Druckknopf 14 ohne Leerhub betätigbar ist.

### Bezugszeichenliste

- 1: Wählhebel
- 2: Grundgehäuse
- 3: Hohischaft
- 4: Führungskanal
- 5: Betätigungsteil
- 6: Schubteil
- 7: Betätigungsende
- 8: Rohr
- 9: Innenraum
- 10: Mantel
- 11: Axialrichtung
- 12: Mittellängsachse
- 13: Handgriff
- 14: Druckknopf
- 15: Arm
- 16: Keilfläche
- 17: Anschlagschulter
- 18: Fixiemase
- 18a: Ausnehmung
- 19: Seitenschenkel
- 20: Mittelschenkel
- 21: Seitenlasche
- 22: Druckfeder
- 23: Kupplungszapfen
- 23a: Freiende
- 24: Mittellängsachse
- 25: Abschnitt
- 26: Gegenfläche
- 27: Anschlag
- 28: Anschlagfläche
- 29: Innenseite
- 30: Fixierteller
- 31: Durchgangsöffnung
- 33: Stützwand
- 34: Nut
- 35: Stirnseite
- 36: Gehäusewand
- 37: Führungsfläche
- 38: Umfangsbereich
- 39: Arretierrichtung
- 40: Pfeil
- 43: Freigaberichtung
- 44: Betätigungsrichtung
- 45: Führung
- 46: Fixierteller
- 47: Ringvorsprung
- 48: Axialschlitz
- 49: Federzunge

## Patentansprüche

1. Wählhebel für Automatikgetriebe mit
- einem Handgriff (13) mit daran angeordnetem Hohlschaft (3),
- einer im Hohlschaft (3) zwischen einer Arretierstellung und einer Freigabestellung in Axialrichtung (11) beweglichen Arretierstange, wobei in der Freigabestellung der Arretierstange der Wählhebel (1) in verschiedene Schaltstellungen schwenkbar und in deren Arretierstellung in der gewählten Schaltstellung fixiert ist,
- einem im Handgriff (13) in einer quer zur Axialrichtung (11) verlaufenden Betätigungsrichtung (44) geführten Betätigungsteil (5), mit dem die Arretierstange in ihre Freigabe- oder Arretierstellung bewegbar ist,
**gekennzeichnet durch**
wenigstens eine Keilfläche (16a,16b) am Betätigungsteil (5) und wenigstens eine mit ihr nach Art eines Keilschubgetriebes zusammenwirkende Gegenfläche (26a,26b) an einem im Handgriff (13) in Axialrichtung (11) **an einer Führungsfläche (37) des Handgriffes** geführten Schubteil (6), welches mit dem in den Handgriff (13) hineinragenden Betätigungsende (7) der Arretierstange derart verbunden ist, daß das Betätigungsende (7) in Betätigungsrichtung (44) beweglich am Schubteil (6) geführt ist.

2. Wählhebel nach Anspruch 1,
**dadurch gekennzeichnet,**
**daß** das Schubteil (6) einen sich in Betätigungsrichtung (44) erstreckenden und eine Durchgangsöffnung (31) im Betätigungsende (7) der Arretierstange durchgreifenden Kupplungszapfen (23) aufweist.

3. Wählhebel nach Anspruch 2,
**dadurch gekennzeichnet,**
**daß** das Freiende des Kupplungszapfens (23) vom Betätigungsteil (5) wegweist.

4. Wählhebel nach Anspruch 2 oder 3,
**dadurch gekennzeichnet,**
**daß** das Schubteil ein im wesentlichen C-förmiger Bügel ist, an dessen Seitenschenkel (19a,19b) je eine mit einer ihr zugeordneten Keilfläche (16a,16b) des Betätigungsteils (5) zusammenwirkende Gegenfläche (26a,26b) angeordnet ist und an dessen Mittelschenkel (20) der Kupplungszapfen (23) angeformt ist.

5. Wählhebel nach Anspruch 4,
**dadurch gekennzeichnet,**
**daß** die Seitenschenkel (19a,19b) das Betätigungsende (7) der Arretierstange im Montagezustand mit Radialabstand flankieren, wobei jeweils zwischen dem Betätigungsende (7) und einem Seitenschenkel (19a,19b) jeweils eine in Axialrichtung (11) verlaufende Führungsfläche (37) angeordnet ist, mit der der Mittelschenkel (20) des Schubteils (6) im Sinne einer axial wirksamen Gleitführung zusammenwirkt.

6. Wählhebel nach Anspruch 5,
**dadurch gekennzeichnet,**
**daß** das Schubteil (6) von einer sich am Betätigungsteil abstützenden Druckfeder (22) beaufschlagt ist.

7. Wählhebel nach Anspruch 4, 5 oder 6,
**dadurch gekennzeichnet,**
**daß** das Betätigungsteil (5) sich in Betätigungsrichtung (44) erstreckende, mit Abstand zueinander angeordnete Arme (15a,15b) mit einer Keilfläche (16a,16b) aufweist, die mit einer entsprechenden Gegenfläche (26a,26b) eines Seitenschenkels (19a,19b) des Schubteils (6) zusammenwirkt.

8. Wählhebel nach einem der Ansprüche 1 bis 7,
**dadurch gekennzeichnet,**
**daß** die Arretierstange in Arretierrichtung (39) federbeaufschlagt ist und daß die wenigstens eine Keilfläche (16a,16b) am Betätigungsteil (5) in die Freigaberichtung (43) zeigt bzw. in Freigaberichtung wirksam ist.

## Claims

1. Selector lever for automatic transmissions, with
- a handle (13) having a hollow shank (3) arranged on it,
- a detaining rod movable in the axial direction (11) in the hollow shank (3) between a detaining position and a releasing position, with the detaining rod in the releasing position the selector lever (1) being pivotable into various shift positions and, in the detaining position of said detaining rod, being fixed in the selected shift position,
- an actuating part (5) which is guided in the handle (13) in an actuating direction (44) running transversely to the axial direction (11) and by means of which the detaining rod can be moved into its releasing or detaining position,
**characterized by**
at least one wedge face (16a, 16b) on the actuating part (5) and at least one counterface (26a, 26b), cooperating with said wedge face in the manner of a wedge-type slider mechanism, on a slider part (6) which is guided in the axial direction (11) in the handle (13) on a guide face (37) of the handle and which is connected to the actuating end (7), projecting into the handle (13) of the detaining rod in such a way that the actuating end (7) is guided on the slider part (6) movably in the actuating direction (44).

2. Selector lever according to Claim 1, **characterized in that** the slider part (6) has a coupling pin (23) extending in the actuating direction (44) and passing through a passage orifice (31) in the actuating end (7) of the detaining rod.

3. Selector lever according to Claim 2, **characterized in that** the free end of the coupling pin (23) points away from the actuating part (5).

4. Selector lever according to Claim 2 or 3, **characterized in that** the slider part is an essentially C-shaped yoke, on each of the side legs (19a, 19b) of which is arranged a counterface (26a, 26b) cooperating with a wedge face (16a, 16b), assigned to it, of the actuating part (5) and on the middle leg (20) of which is integrally formed the coupling pin (23).

5. Selector lever according to Claim 4, **characterized in that** the side legs (19a, 19b) flank the actuating end (7) of the detaining rod at a radial distance from it in the mounted state, there being arranged in each case between the actuating end (7) and one side leg (19a, 19b) a guide face (37) which runs in the axial direction (11) and with which the middle leg (20) of the slider part (6) cooperates in the manner of an axially effective sliding guide.

6. Selector lever according to Claim 5, **characterized in that** the slider part (6) is loaded by a compression spring (22) supported on the actuating part.

7. Selector lever according to Claim 4, 5 or 6, **characterized in that** the actuating part (5) has arms (15a, 15b) which extend in the actuating direction (44) and are arranged at a distance from one another and which have a wedge face (16a, 16b) which cooperates with a corresponding counterface (26a, 26b) of a side leg (19a, 19b) of the slider part (6).

8. Selector lever according to one of Claims 1 to 7, **characterized in that** the detaining rod is springloaded in the detaining direction (39), and **in that** the at least one wedge face (16a, 16b) on the actuating part (5) points in the releasing direction (43) or is effective in the releasing direction.

## Revendications

1. Levier sélecteur pour boîtes de vitesses automatiques, comportant
- une poignée à main (13) avec une tige creuse (3) agencée sur celle-ci,
- une barre d'arrêt mobile en direction axiale (11) dans la tige creuse (3) entre une position d'arrêt et une position de libération et, dans la position de libération de la barre d'arrêt, le levier sélecteur (1) peut être pivoté dans des positions de commutation différentes, et dans sa position d'arrêt il est fixé dans la position de commutation sélectionnée,
- un organe d'actionnement (5) guidé dans la poignée à main (13) dans une direction d'actionnement (44) s'étend perpendiculairement à la direction axiale (11), organe avec lequel la barre d'arrêt est mobile dans sa position de libération ou d'arrêt,
**caractérisé par** au moins une surface en coin (16a, 16b) sur l'organe d'actionnement (5) et par au moins une contre-surface (26a, 26b) coopérant avec celle-ci à la manière d'un mécanisme de poussée à coin sur un organe de poussée (6) guidé dans la poignée à main (13) en direction axiale (11) sur une surface de guidage (37) de la poignée à main, organe qui est relié à l'extrémité d'actionnement (7), pénétrant dans la poignée à main (13), de la barre d'arrêt de telle sorte que l'extrémité d'actionnement (7) est guidée mobile en direction d'actionnement (44) sur l'organe de poussée (6).

2. Levier sélecteur selon la revendication 1, **caractérisé en ce que** l'organe de poussée (6) comprend un tourillon d'accouplement (23) qui s'étend en direction d'actionnement (44) et qui traverse une ouverture traversante (31) dans l'extrémité d'actionnement (7) de la barre d'arrêt.

3. Levier sélecteur selon la revendication 2, **caractérisé en ce que** l'extrémité libre du tourillon d'accouplement (23) est dirigée en éloignement de l'organe d'actionnement (5).

4. Levier sélecteur selon l'une ou l'autre des revendications 2 et 3, **caractérisé en ce que** l'organe de poussée est un étrier sensiblement en forme de C, sur les branches latérales (19a, 19b) duquel est agencée une contre-surface respective (26a, 26b) coopérant avec une surface en coin (16a, 16b) qui lui est associée sur l'organe d'actionnement (5), et sur la branche centrale (20) duquel est conformé le tourillon d'accouplement (23).

5. Levier sélecteur selon la revendication 4, **caractérisé en ce que** les branches latérales (19a, 19b) flanquent à distance radiale l'extrémité d'actionnement (7) de la barre d'arrêt dans l'état monté, et **en ce qu'**une surface de guidage respective (37) s'étendant en direction axiale (11) est agencée entre l'extrémité d'actionnement (7) et une branche latérale (19a, 19b), surface avec laquelle coopère la branche centrale (20) de l'organe de poussée (6) dans le sens d'un guidage coulissant agissant axialement.

6. Levier sélecteur selon la revendication 5, **caractérisé en ce que** l'organe de poussée (6) est sollicité par un ressort de compression (22) qui prend appui sur l'organe d'actionnement.

7. Levier sélecteur selon les revendications 4, 5 ou 6, **caractérisé en ce que** l'organe d'actionnement (5) comprend des bras (15a, 15b) qui s'étendent en direction d'actionnement (44), qui sont agencés à distance l'un de l'autre, et qui comprennent une surface en coin (16a, 16b) qui coopère avec une contre-surface correspondante (26a, 26b) d'une branche latérale (19a, 19b) de l'organe de poussée (6).

8. Levier sélecteur selon l'une quelconque des revendications 1 à 7,
**caractérisé en ce que** la barre d'arrêt est sollicitée par un ressort en direction d'arrêt (39), et **en ce que** ladite au moins une surface en coin (16a, 16b) sur l'organe d'actionnement (5) est dirigée dans la direction de libération (43) ou agit en direction de libération.
